# EUROPÄISCHE PATENTANMELDUNG

(11) **EP 4 468 106 A1**
(43) Veröffentlichungstag der Anmeldung: **27.11.2024**
(21) Anmeldenummer: 24172307.1
(22) Anmeldetag: 25.04.2024
(51) Int. Cl.: G05D 1/242, G05D 1/661, B60W 30/00, B62D 15/00, G05D 105/28, G05D 109/10

(54) **VERFAHREN UND SYSTEM ZUM STEUERN DER FAHRDYNAMIK EINES FAHRZEUGS**

(30) Priorität: 25.05.2023 DE 102023204872
(71) Anmelder: ZF Friedrichshafen AG, 88046 Friedrichshafen (DE)
(72) Erfinder: Banerjee, Alexander, 88094 Oberteuringen (DE); Klinger, Tobias, 31832 Springe (DE); Rüdinger, Maximilian, 78462 Konstanz (DE); Goers, Andreas, 30982 Pattensen (DE)
(74) Vertreter: ZF Friedrichshafen AG

(57) **Zusammenfassung**

Ein Verfahren zum Steuern der Fahrdynamik eines Fahrzeugs (102), wobei das Fahrzeug (102) einen Wechselbrückenrahmen (20) zum Unterfahren und Aufnehmen einer Wechselbrücke (2) und einen zweidimensional erfassenden Sensor (310) zum Erfassen der Wechselbrücke (2) aufweist, mit den Schritten: zweidimensionales Erfassen einer Innenkontur (6) einer Zentrierschiene (4) der Wechselbrücke (2) mit dem zweidimensional erfassenden Sensor (310), Bestimmen einer Pose der zweidimensional erfassten Zentrierschiene (4) in einem fahrzeuggebundenen Koordinatensystem (K) des Fahrzeugs (102) basierend auf der zweidimensional erfassten Innenkontur (6), Bestimmen einer Relativpose des Fahrzeugs (102) bezogen auf die Wechselbrücke (2) basierend auf der bestimmten Pose, und Steuern einer Fahrdynamikkomponente (320) des Fahrzeugs (102) basierend auf der bestimmten Relativpose zum automatisierten Unterfahren und Aufnehmen der Wechselbrücke (2) mit dem Wechselbrückenrahmen (20). Ein System (400), welches eingerichtet ist, das Verfahren zum Steuern der Fahrdynamik eines Fahrzeugs (102) auszuführen, und ein Fahrzeug (102) mit einem derartigen System (400).

## Beschreibung

### Technisches Gebiet

Die vorliegende Erfindung bezieht sich auf ein Verfahren und ein System zum Steuern der Fahrdynamik eines Fahrzeugs. Die vorliegende Erfindung bezieht sich auch auf ein Fahrzeug mit einem derartigen System.

### Stand der Technik

Aus dem Stand der Technik sind Fahrzeuge zum Unterfahren und Aufnehmen einer Wechselbrücke bekannt. Für ein Anfahren und Unterfahren der Wechselbrücke ist es bekannt, einen Abstand zu der Wechselbrücke zu bestimmen, um basierend auf dem bestimmten Abstand eine relative Position des Fahrzeugs zu der Wechselbrücke zu korrigieren.

In entsprechender Weise ist es aus der DE 10 2018 210 346 A1 bekannt, einen Lateralversatz einer Wechselbrücke in Relation zu einem Fahrzeug während einem Einspurvorgang des Fahrzeugs unter der Wechselbrücke sensorisch zu bestimmen. Für das Bestimmen des Lateralversatzes werden diskrete Abstände zu Führungselementen der Wechselbrücke mit Distanzsensoren erfasst. Ferner ist es in entsprechender Weise aus der DE 10 2018 215 982 A1 bekannt, einen diskreten lateralen Versatz zwischen einem fahrzeugseitigen Zentrierelement und einem wechselbrückenseitigen Zentrierelement für das Einspuren eines Fahrzeugs unter einer Wechselbrücke sensorisch zu ermitteln.

### Darstellung der Erfindung

Die vorliegende Erfindung betrifft in einem Aspekt ein Verfahren zum Steuern der Fahrdynamik eines Fahrzeugs. Die Fahrdynamik kann mindestens eines von einer Längsdynamik des Fahrzeugs und einer Querdynamik des Fahrzeugs aufweisen. Bei dem Fahrzeug kann es sich um ein richtungsgebundenes Fahrzeug zum richtungsgebundenen Anfahren, Unterfahren und Befördern der Wechselbrücke handeln. Alternativ dazu kann es sich bei dem Fahrzeug um ein nicht richtungsgebundenes Fahrzeug handeln, welches zu einem nicht richtungsgebundenen Anfahren, Unterfahren und Befördern der Wechselbrücke eingerichtet ist. Bei dem Fahrzeug kann es sich daher um ein Zweirichtungsfahrzeug handeln. Bei dem Fahrzeug kann es sich um ein Zugfahrzeug oder um einen Anhänger handeln, wobei der Anhänger von einem Zugfahrzeug führbar sein kann.

Bei dem Fahrzeug kann es sich ferner um ein selbstfahrendes Fahrzeug handeln. Das Fahrzeug kann eingerichtet sein, ohne Einfluss eines menschlichen Fahrers eine Wechselbrücke aufzunehmen und zu befördern. Das Fahrzeug kann zudem eingerichtet sein, ohne Einfluss eines menschlichen Fahrers eine Wechselbrücke anzufahren und zu unterfahren. Bei dem Fahrzeug kann es sich um ein autonomes Fahrzeug handeln, welches eine Hochautomatisierung nach Level 4 der BASt oder eine Vollautomatisierung nach Level 5 der BASt als einen Automatisierungsgrad des Fahrzeugs aufweisen kann. Das Fahrzeug kann daher ein hochautomatisiertes Fahrzeug oder ein vollautomatisiertes Fahrzeug sein. Bei dem Fahrzeug kann es sich um ein Roboterfahrzeug handeln. Das Fahrzeug kann keine Fahrerkabine aufweisen und somit fahrerkabinenlos ausgebildet sein.

Bei der Wechselbrücke kann es sich mit anderen Worten auch um einen Wechselbehälter oder einen Wechselaufbau handeln. Die Wechselbrücke kann als BDF-Wechselbrücke ausgebildet sein. Die Wechselbrücke kann einen von dem selbstfahrenden Zweirichtungsfahrzeug aufzunehmenden Wechselbrückencontainer aufweisen.

Das Fahrzeug weist einen Wechselbrückenrahmen auf. Der Wechselbrückenrahmen kann auf einem Fahrgestell des Fahrzeugs angeordnet sein, wobei das Fahrgestell den Wechselbrückenrahmen tragen kann. Der Wechselbrückenrahmen ist zum Unterfahren und Aufnehmen der Wechselbrücke eingerichtet. Das Aufnehmen kann ein Anheben der Wechselbrücke sein oder aufweisen. Der Wechselbrückenrahmen ist relativ zu der aufzunehmenden Wechselbrücke vertikal bewegbar. Der Wechselbrückenrahmen kann relativ zu dem Fahrgestell anhebbar sein.

Das Fahrzeug weist einen zweidimensional erfassenden Sensor zum Erfassen der Wechselbrücke auf. Die Wechselbrücke kann in einem zweidimensionalen Sensorkoordinatensystem erfasst werden. Bei dem zweidimensional erfassenden Sensor kann es sich um einen Sensor handeln, welcher eingerichtet ist, die Wechselbrücke zweidimensional abzutasten. Der zweidimensional erfassende Sensor kann eingerichtet sein, zweidimensionale Messpunkte auf der Wechselbrücke zu erfassen. Mit anderen Worten kann der Sensor eingerichtet sein, Messpunkte der Wechselbrücke zu erfassen, welche zweidimensionale Koordinaten aufweisen. Bei den zweidimensionalen Koordinaten kann es sich beispielsweise um Polarkoordinaten oder kartesische Koordinaten handeln, welche in einem zweidimensionalen Koordinatensystem des Sensors mit diesem erfassbar sind.

Bei dem zweidimensional erfassenden Sensor kann es sich auch um einen dreidimensional erfassenden Sensor handeln, welcher eingerichtet sein kann, die Wechselbrücke dreidimensional abzutasten. Der dreidimensional erfassende Sensor kann eingerichtet sein, dreidimensionale Messpunkte auf der Wechselbrücke zu erfassen. Mit anderen Worten kann der Sensor eingerichtet sein, Messpunkte der Wechselbrücke zu erfassen, welche dreidimensionale Koordinaten aufweisen. Bei den dreidimensionalen Koordinaten kann es sich beispielsweise um Polarkoordinaten oder kartesische Koordinaten handeln, welche in einem dreidimensionalen Koordinatensystem des Sensors mit diesem erfassbar sind.

Der zweidimensional erfassende Sensor kann ein aktiver oder passiver Sensor sein. Der zweidimensional erfassende Sensor kann ein distanzmessender Sensor sein. Alternativ oder zusätzlich kann der zweidimensional erfassende Sensor mindestens eines von einem bilderfassenden Sensor, induktiven Sensor oder mechanischen Sensor sein. Der zweidimensional erfassende Sensor kann als ein zweidimensional scannender Sensor ausgebildet sein. Bei dem distanzmessenden Sensor kann es sich beispielsweise um einen Laserscanner, ein Radarmessgerät oder um ein Ultraschallmessgerät handeln. Der Laserscanner, das Radarmessgerät oder das Ultraschallmessgerät kann als ein zweidimensional scannender Sensor ausgebildet sein. Der bilderfassende Sensor kann als eine Kamera ausgebildet sein. Bei der Kamera kann es sich um eine 3D-Kamera beziehungsweise um eine ToF-Kamera handeln. Bei dem bilderfassenden Sensor kann es sich auch ein Stereo-Kamerapaar handeln, welches mit einer Stereobasis auf dem Fahrzeug angeordnet ist. Mit dem zweidimensional erfassenden Sensor kann eine Punktwolke mit Messpunkten auf der Wechselbrücke erfasst werden. Bei der Punktwolke kann es sich um eine zweidimensionale Punktwolke handeln.

Das Verfahren weist als einen Schritt ein zweidimensionales Erfassen einer Innenkontur einer Zentrierschiene der Wechselbrücke mit dem zweidimensional erfassenden Sensor auf. Die Innenkontur kann an einem zu einer Brückenlängsachse der Wechselbrücke zugewandtem Übergangsbereich von der Zentrierschiene zu einem Unterboden der Wechselbrücke ausgebildet sein. Die Innenkontur kann zumindest abschnittweise geradlinig verlaufen. Das zweidimensionale Erfassen der Innenkontur kann daher auch eine Linienerkennung der Innenkontur aufweisen. Die Innenkontur kann in dem zweidimensionalen Sensorkoordinatensystem erfasst werden. Die Innenkontur kann eine der Brückenlängsachse zugewandte Kontur der Zentrierschiene sein. Die Brückenlängsachse kann eine in einer Längserstreckung der Wechselbrücke verlaufende Mittenachse der Wechselbrücke sein. Die Innenkontur kann einen zweidimensionalen geometrischen Verlauf entlang der Zentrierschiene aufweisen. In dem Schritt des zweidimensionalen Erfassens kann der zweidimensionale Verlauf zweidimensional erfasst beziehungsweise zweidimensional abgetastet werden. Basierend auf dem Schritt des zweidimensionalen Erfassens kann ein zweidimensionales Parametrisieren der Innenkontur durchgeführt werden, wobei mindestens zwei oder drei Parameter bestimmt werden können, welche einen geometrischen Verlauf der Innenkontur zweidimensional parametrisieren können.

Das Verfahren weist als einen weiteren Schritt ein Bestimmen einer Pose der zweidimensional erfassten Innenkontur in einem fahrzeuggebundenen Koordinatensystem des Fahrzeugs auf. Die Pose kann eine Position und eine Orientierung der Innenkontur in dem fahrzeuggebundenen Koordinatensystem aufweisen. Bei dem fahrzeuggebundenen Koordinatensystem kann es sich um das zweidimensionale Sensorkoordinatensystem handeln. Der Schritt des Bestimmens der Pose wird basierend auf der zweidimensional erfassten Innenkontur durchgeführt. In einem weiteren Schritt des Verfahrens kann eine zweidimensionale Parametrisierung oder Modellierung der Innenkontur basierend auf der zweidimensional erfassten Innenkontur bestimmt werden. Die Pose kann aus der zweidimensionalen Parametrisierung oder Modellierung der Innenkontur abgeleitet werden.

Das Verfahren weist als einen weiteren Schritt ein Bestimmen einer Relativpose des Fahrzeugs bezogen auf die Wechselbrücke auf. Der Schritt des Bestimmens der Relativpose wird basierend auf der bestimmten Pose durchgeführt. In dem Schritt des Bestimmens der Relativpose kann die Relativpose bezogen auf eine Brückenlängsachse der Wechselbrücke bestimmt werden. In dem Schritt des Bestimmens der Relativpose kann eine Relativpose des Wechselbrückenrahmens bezogen auf eine Mittenachse der Wechselbrücke bestimmt werden. Die Innenkontur kann einen Parallelversatz zu der Brückenlängsachse aufweisen. Bei dem Parallelversatz kann es sich um einen vordefinierten Parallelversatz handeln. Der vordefinierte Parallelversatz kann ein genormter Parallelversatz sein. Die Relativpose kann eine relative Position und eine relative Orientierung des Fahrzeugs bezogen auf die Wechselbrücke aufweisen. Die Relativpose kann eine Pose der Wechselbrücke in dem fahrzeuggebundenen Koordinatensystem sein, bei welchem es sich um ein Navigationskoordinatensystem des Fahrzeugs handeln kann. Die Relativpose kann aus einer zweidimensionalen Transformation der Pose der zweidimensional erfassten Innenkontur in das Navigationskoordinatensystem abgeleitet werden. Bei dem Navigationskoordinatensystem kann es sich um Fahrdynamikkoordinatensystem handeln.

Das Verfahren weist als einen weiteren Schritt ein Steuern einer Fahrdynamikkomponente des Fahrzeugs zum automatisierten Unterfahren und Aufnehmen der Wechselbrücke mit dem Wechselbrückenrahmen auf. Bei der Fahrdynamikkomponente kann es sich um eine Längsdynamikkomponente handeln. Der Schritt des Steuerns kann daher zu einem Beschleunigen oder Abbremsen des Fahrzeugs bei dem automatisierten Unterfahren der Wechselbrücke durchgeführt werden. Bei der Fahrdynamikkomponente kann es sich um eine Querdynamikkomponente handeln. Der Schritt des Steuerns kann daher zu einem Lenken des Fahrzeugs bei dem automatisierten Unterfahren der Wechselbrücke durchgeführt werden. Der Schritt des Steuerns der Fahrdynamikkomponente wird basierend auf der bestimmten Relativpose durchgeführt. Der Schritt des Steuerns kann basierend auf der relativen Position der Relativpose zum Beschleunigen oder Abbremsen des Fahrzeugs bei dem automatisierten Unterfahren der Wechselbrücke durchgeführt werden. Alternativ oder zusätzlich kann der Schritt des Steuerns basierend auf der relativen Orientierung der Relativpose zum Beschleunigen oder Abbremsen des Fahrzeugs bei dem automatisierten Unterfahren der Wechselbrücke durchgeführt werden.

Mit dem Verfahren kann es durch die zweidimensionale Erfassung der Innenkontur in vorteilhafter Weise möglich werden, an einer einzigen Erfassungsposition eines fahrzeuggebundenen Sensors die Relativpose des Fahrzeugs bezogen auf die anzufahrende oder unterzufahrende Wechselbrücke zu bestimmen. Weiter kann es mit dem Verfahren in vorteilhafter Weise ermöglicht sein, die Relativpose mit nur einem einzigen zweidimensional erfassenden Sensor zu bestimmen. Das Fahrzeug kann daher nur einen zweidimensional erfassenden Sensor aufweisen. Dem Verfahren liegt hierfür die Erkenntnis zugrunde, dass es zum Steuern der Fahrdynamik ausreichend sein kann, nur eine Zentrierschiene des Zentriertunnels zu erfassen und den genormten Parallelversatz zu einer Mittenachse der Wechselbrücke für das Steuern der Fahrdynamik zu berücksichtigen.

Eine weitere vorteilhafte Wirkung der zweidimensionalen Erfassung der Innenkontur der Zentrierschiene kann darin bestehen, dass die Pose der Innenkontur, an welcher eine Einspurhilfe des Wechselbrückenrahmens bei einem Unterfahren der Wechselbrücke geführt werden kann, unabhängig von einem Profil der Zentrierschiene erfasst werden kann. Das Verfahren kann daher für verschiedene Profile der Zentrierschienen, beispielsweise bei C-Profilen, Doppel T-Profilen oder Kastenprofilen, der Zentrierschienen durchgeführt werden, da deren Innenkontur direkt erfasst wird.

Gemäß einer Ausführungsform des Verfahrens können die Schritte des Verfahrens während dem Unterfahren der Wechselbrücke mit dem Wechselbrückenrahmen durchgeführt werden. Alternativ oder zusätzlich können die Schritte des Verfahrens während dem Anfahren der Wechselbrücke mit dem Wechselbrückenrahmen durchgeführt werden. Werden die Schritte des Verfahrens während dem Unterfahren der Wechselbrücke mit dem Wechselbrückenrahmen durchgeführt, kann ein zweidimensionaler Erfassungsbereich des Sensors quer zu einer Fahrtrichtung des Fahrzeugs ausgerichtet sein, um eine sich zu einer Fahrzeuglängsachse versetzt befindende Innenkontur zu erfassen. Werden die Schritte des Verfahrens während dem Anfahren der Wechselbrücke mit dem Wechselbrückenrahmen durchgeführt, kann der zweidimensionale Erfassungsbereich des Sensors in Fahrtrichtung des Fahrzeugs auf die anzufahrende Wechselbrückenendseite ausgerichtet sein, um eine sich in Fahrtrichtung befindende Innenkontur zu erfassen. Der zweidimensional erfassende Sensor kann auch einen Erfassungsbereich aufweisen, welcher quer zu der Fahrtrichtung des Fahrzeugs und in Fahrtrichtung des Fahrzeugs ausgerichtet ist.

Gemäß einer weiteren Ausführungsform des Verfahrens kann dieses als einen weiteren Schritt ein zweidimensionales Erfassen einer Innenkontur einer weiteren Zentrierschiene der Wechselbrücke mit dem zweidimensional erfassenden Sensor aufweisen. Die Zentrierschiene und die weitere Zentrierschiene können einen Zentriertunnel der Wechselbrücke ausbilden. Der Schritt des Bestimmens der Pose kann basierend auf den beiden erfassten Innenkonturen durchgeführt werden. Die Brückenmittenachse kann aus den erfassten Innenkonturen abgeleitet werden, wobei die Brückenmittenachse gleichbeabstandet zwischen den erfassten Innenkonturen verlaufen kann. Die Pose kann daher auch basierend auf der abgeleiteten Brückenmittenachse bestimmt werden. Die Genauigkeit der Pose kann so durch ein überbestimmtes Erfassen der Innenkonturen erhöht werden.

Gemäß einer weiteren Ausführungsform des Verfahrens kann dieses als einen weiteren Schritt ein Bestimmen einer Fahrdynamikkorrekturgröße basierend auf der bestimmten Relativpose aufweisen. Der Schritt des Steuerns der Fahrdynamikkomponente kann basierend auf der bestimmten Fahrdynamikkorrekturgröße durchgeführt werden. Bei der Fahrdynamikkorrekturgröße kann es sich um eine Querdynamikkorrekturgröße, beispielsweise eine Lenkwinkelkorrekturgröße handeln. Alternativ oder zusätzlich kann es sich bei der Fahrdynamikkorrekturgröße um eine Längsdynamikkorrekturgröße, beispielsweise um eine Fahrtwegkorrekturgröße handeln. Gemäß einer weiteren Ausführungsform des Verfahrens kann der Schritt des Steuerns der Fahrdynamikkomponente ein Steuern von mindestens einem von einer Querdynamikkomponente und einer Längsdynamikkomponente des Fahrzeugs aufweisen. Der Schritt des Steuerns kann basierend auf der Fahrdynamikkorrekturgröße oder der Längsdynamikkorrekturgröße durchgeführt werden.

Handelt es sich bei dem zweidimensional erfassenden Sensor wie zuvor erwähnt um einen dreidimensional erfassenden Sensor, kann als dritte Dimension eine Höhendifferenz zwischen einem Höhenniveau des Wechselbrückenrahmens des Fahrzeugs und einem Höhenniveau der Wechselbrücke bestimmt werden. Das Höhenniveau des Wechselbrückenrahmens kann basierend auf der ermittelten Höhendifferenz mittels einer Fahrzeugeinrichtung eingestellt werden. Bei der Fahrzeugeinrichtung zum Einstellen des Höhenniveaus des Wechselbrückenrahmens kann es sich um mindestens einen Aktuator handeln. Bei dem Aktuator zum Einstellen des Höhenniveaus kann es sich beispielsweise um eine Druckluftfederung des Fahrzeugs handeln. In einem weiteren Beispiel kann es sich bei dem Aktuator um einen höhenverstellbaren Hubtisch und/oder einen höhenverstellbaren Wechselbrückenrahmen des Fahrzeugs handeln. Das Höhenniveau des Wechselbrückenrahmens kann beim Unterfahren der Wechselbrücke kontinuierlich an das Höhenniveau der Wechselbrücke angepasst werden. Das Verfahren kann daher ein Regeln der Höhendifferenz zwischen dem Höhenniveau des Wechselbrückenrahmens und dem Höhenniveau der Wechselbrücke beim Unterfahren der Wechselbrücke aufweisen.

Die vorliegende Erfindung betrifft in einem weiteren Aspekt ein System zum Steuern der Fahrdynamik eines Fahrzeugs. Das System kann zum Durchführen des Verfahrens gemäß dem vorhergehenden Aspekt eingerichtet sein. Das System weist einen zweidimensional erfassenden Sensor zum Erfassen einer Wechselbrücke auf. Der zweidimensional erfassende Sensor ist eingerichtet, eine Innenkontur einer Zentrierschiene der Wechselbrücke zweidimensional zu erfassen, Der Sensor kann wie der zu dem vorhergehenden Aspekt beschriebene zweidimensional erfassende Sensor ausgebildet und eingerichtet sein. Der Sensor kann eingerichtet sein, den Schritt des zweidimensionalen Erfassens durchzuführen.

Das System weist eine Steuereinrichtung auf, welche eingerichtet ist, eine Pose der zweidimensional erfassten Innenkontur basierend auf der zweidimensional erfassten Innenkontur in einem fahrzeuggebundenen Koordinatensystem des Fahrzeugs zu bestimmen. Die Steuereinrichtung kann eingerichtet sein, den Schritt des Bestimmens der Pose durchzuführen. Die Steuereinrichtung ist eingerichtet, eine Relativpose des Fahrzeugs bezogen auf die Wechselbrücke basierend auf der bestimmten Pose zu bestimmen. Die Steuereinrichtung kann eingerichtet sein, den Schritt des Bestimmens der Relativpose durchzuführen. Die Steuereinrichtung ist eingerichtet, eine Fahrdynamikkomponente des Fahrzeugs basierend auf der bestimmten Relativpose zum automatisierten Unterfahren und Aufnehmen der Wechselbrücke mit dem Wechselbrückenrahmen zu steuern. Die Steuereinrichtung kann eingerichtet sein, den Schritt des Steuerns durchzuführen.

Die vorliegende Erfindung betrifft in einem weiteren Aspekt ein Fahrzeug zum Befördern einer Wechselbrücke, welches das System gemäß dem vorhergehenden Aspekt aufweist. Das Fahrzeug kann wie zu den vorhergehenden Aspekten beschrieben ausgebildet sein. Der zweidimensional erfassende Sensor des Systems kann an einem Längsendbereich des Fahrzeugs, beispielsweise an einem Heckbereich des Fahrzeugs angeordnet sein. Gemäß einer Ausführungsform des Fahrzeugs kann das Fahrzeug ein nicht richtungsgebundenes Fahrzeug sein, welches zu einem nicht richtungsgebundenen Anfahren und Unterfahren der Wechselbrücke ausgebildet sein kann.

Gemäß einer Ausführungsform des Fahrzeugs kann der zweidimensional erfassende Sensor des Systems an einer Fahrzeuglängsachse angeordnet sein. Der Sensor kann einen zu der Fahrzeuglängsachse symmetrischen Erfassungsbereich aufweisen. Der Sensor kann einen Erfassungsbereich aufweisen, welcher sich quer zu der Fahrzeuglängsachse in beide Querrichtungen erstreckt. Mit einer derartigen Anordnung kann wahlweise eine Innenkontur der beiden Innenkonturen der Zentrierschienen des Zentriertunnels erfasst werden. Mit der Anordnung können auch beide Innenkonturen der Zentrierschienen des Zentriertunnels erfasst werden.

Gemäß einer weiteren Ausführungsform des Fahrzeugs kann dieses zwei zweidimensional erfassende Sensoren aufweisen, welche bezogen auf eine Fahrzeuglängsachse versetzt an dem Fahrzeug angeordnet sind. Die Sensoren können bezogen auf die Fahrzeuglängsachse versetzte Erfassungsbereiche aufweisen, welche auf die Innenkontur ausgerichtet sein können. Jeder zweidimensional erfassende Sensor kann wie der zweidimensional erfassende Sensor des Systems ausgebildet sein.

Gemäß einer weiteren Ausführungsform des Fahrzeugs kann dieses zwei zweidimensional erfassende Sensoren aufweisen, welche bezogen auf eine Fahrzeugquerachse versetzt an dem Fahrzeug angeordnet sein können. Die Sensoren können bezogen auf die Fahrzeugquerachse versetzte Erfassungsbereiche aufweisen, welche auf die Innenkontur ausgerichtet sein können. Jeder zweidimensional erfassende Sensor kann wie der zweidimensional erfassende Sensor des Systems ausgebildet sein. Mit einer derartigen Sensoranordnung kann die Auflösung, Robustheit und Zuverlässigkeit des Systems verbessert werden.

Gemäß einer weiteren Ausführungsform des Fahrzeugs kann dieses zwei zweidimensional erfassende Sensoren aufweisen, welche an den beiden Längsendbereichen des Fahrzeugs angeordnet sind. Die Sensoren können bezogen auf eine Fahrzeuglängsachse oder Fahrzeugquerachse symmetrische Erfassungsbereiche aufweisen. Jeder zweidimensional erfassende Sensor kann wie der zweidimensional erfassende Sensor des Systems ausgebildet sein. Mit einer derartigen Sensoranordnung kann die Auflösung, Robustheit und Zuverlässigkeit des Systems weiter verbessert werden.

### Kurze Beschreibung der Figuren

- Figur 1: zeigt eine Wechselbrücke gemäß einer Ausführungsform in einer Ansicht auf einen Zentriertunnel.
- Figur 2: zeigt ein Fahrzeug mit einem System nach einer jeweiligen Ausführungsform zum Steuern der Fahrdynamik des Fahrzeugs bei einem Unterfahren der Wechselbrücke aus Figur 1.
- Figur 3: zeigt ein nicht richtungsgebundenes Fahrzeug mit einem System nach einer jeweiligen Ausführungsform zum Steuern der Fahrdynamik des Fahrzeugs bei einem Unterfahren der Wechselbrücke aus Figur 1.
- Figur 4: zeigt ein Ablaufdiagramm mit Verfahrensschritten zum Durchführen eines Verfahrens zum Steuern der Fahrdynamik eines Fahrzeugs gemäß einer Ausführungsform.

### Detaillierte Beschreibung von Ausführungsformen

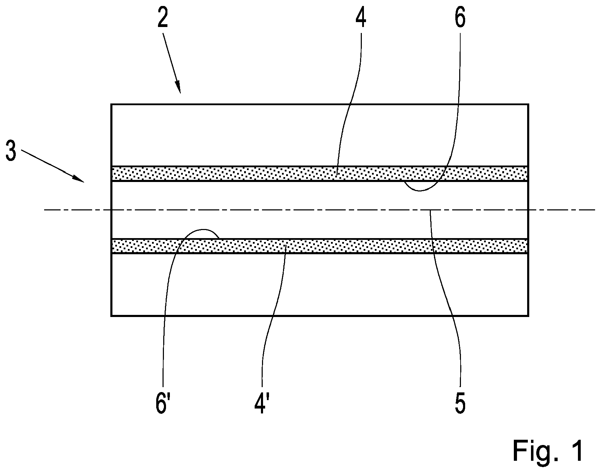

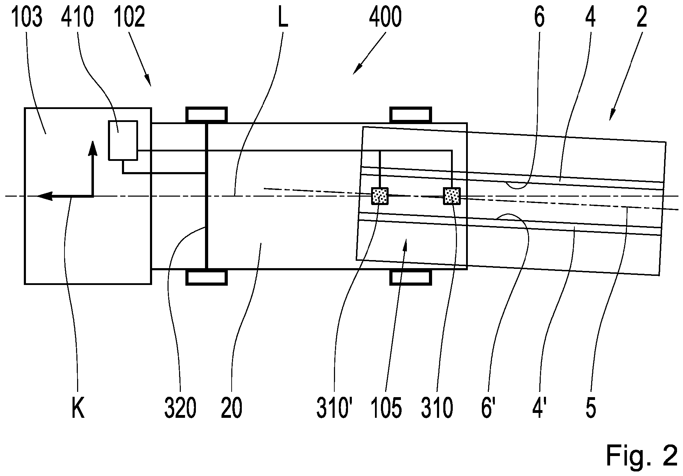

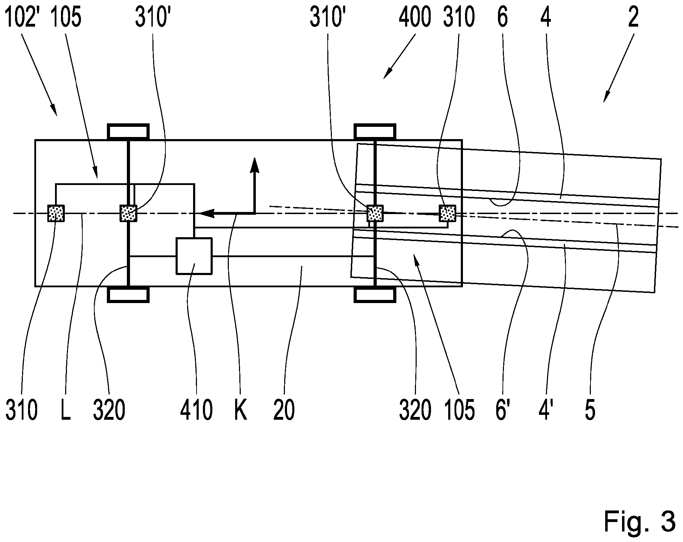

Figur 1 zeigt eine Wechselbrücke 2 in einer Ansicht von unten auf den Unterboden der Wechselbrücke 2. Die Wechselbrücke 2 weist an ihrem Unterboden einen Zentriertunnel 3 auf, welcher symmetrisch zu einer Brückenlängsachse 5 an der Wechselbrücke 2 angeordnet ist. Der Zentriertunnel 3 weist zwei Zentrierschienen 4, 4' auf, welche parallel versetzt und symmetrisch zu der Brückenlängsachse 5 an dem Unterboden der Wechselbrücke 2 angebracht sind. Die Zentrierschienen 4, 4' weisen jeweils eine Innenkontur 6, 6' auf, welche durch eine jeweilige Profilseite der Zentrierschienen 4, 4' ausgebildet ist. Die Profilseiten und die Innenkonturen 6, 6' sind der Brückenlängsachse 5 zugewandt. Der Zentriertunnel 3 stellt somit eine Unterfahrhilfe zum mittigen Unterfahren der Wechselbrücke 2 durch den in den Figuren 2 und 3 gezeigten Wechselbrückenrahmen 20 eines Fahrzeugs 102 bereit. In den Figuren nicht gezeigte Zentrierhilfen des Wechselbrückenrahmens 20 werden bei dem Unterfahren der Wechselbrücke 2 durch das Fahrzeug 102 entlang der Innenkonturen 6, 6' der Zentrierschienen 4, 4' geführt, um bei Erreichen eines in den Figuren nicht gezeigten Endanschlags der Wechselbrücke 2 eine mittige Aufnahmeposition des Fahrzeugs 102 zu der Wechselbrücke 2 zu bewirken. In der Aufnahmeposition kann die Wechselbrücke 2 an dem Fahrzeug 102 verriegelt werden, um die Wechselbrücke 2 mit dem Fahrzeug 102 zu befördern.

Figur 2 zeigt die Wechselbrücke 2 aus Figur 1, welche von dem Fahrzeug 102 unterfahren wird. Das Fahrzeug 102 weist einen zweidimensional erfassenden Sensor 310 auf, welcher auf dem Wechselbrückenrahmen 20 des Fahrzeugs 102 angeordnet ist und welcher bei dem Unterfahren der Wechselbrücke 2 unter der Wechselbrücke 2 angeordnet sein kann. Ein zweidimensionaler Erfassungsbereich des zweidimensional erfassenden Sensors 310 ist auf mindestens eine Innenkontur 6 der Innenkonturen 6, 6' der Zentrierschienen 4, 4' ausgerichtet. Des zweidimensional erfassende Sensor 310 erfasst die Innenkontur 6 zweidimensional. Ist der zweidimensional erfassende Sensor 310 als distanzmessender Sensor ausgebildet, tastet der zweidimensional erfassende Sensor 310 die Innenkontur 6 zweidimensional ab und erzeugt eine zweidimensionale Punktwolke mit Messpunkten entlang der Innenkontur 6. Die Messpunkte werden in einem fahrzeuggebundenen Koordinatensystem K erfasst und von einer Steuereinrichtung 410 eingelesen. Die Steuereinrichtung 410 ist eingerichtet, eine Fahrdynamikkomponente 320 des Fahrzeugs 102 zu steuern. Der zweidimensional erfassende Sensor 310 und die Steuereinrichtung 410 sind Bestandteile eines Systems 400 zum Steuern der Fahrdynamik des Fahrzeugs 102. Bei der Fahrdynamikkomponente 320 des Fahrzeugs 102 handelt es sich in einer Ausführungsform um eine antreibbare Achse des Fahrzeugs 102. Bei der antreibbaren Achse kann es sich auch um eine lenkbare Achse des Fahrzeugs 102 handeln. Das Fahrzeug 102 weist einen optionalen weiteren zweidimensional erfassenden Sensor 310' auf, welcher auf dem Wechselbrückenrahmen 20 angeordnet ist. Jeder der Sensoren 310, 310' ist gemäß der in Figur 2 gezeigten Ausführungsform entlang einer Fahrzeuglängsachse L angeordnet. Jeder der Sensoren 310, 310' ist zudem an einem von einer Fahrerkabine 103 des Fahrzeugs 102 abgewandten Längsendbereich 105 beziehungsweise am Heck des Fahrzeugs 102 angeordnet.

Das in Figur 3 gezeigte nicht richtungsgebundene Fahrzeug 102' unterscheidet sich von dem in Figur 2 gezeigten Fahrzeug 102 darin, dass das nicht richtungsgebundene Fahrzeug 102' fahrerkabinenlos ausgebildet ist. Das in Figur 3 gezeigte nicht richtungsgebundene Fahrzeug 102' unterscheidet sich von dem in Figur 2 gezeigten Fahrzeug 102 weiter darin, dass das nicht richtungsgebundene Fahrzeug 102' zum Unterfahren der Wechselbrücke 2 in zwei Richtungen bezogen auf die Fahrzeuglängsachse L ausgebildet ist. Das nicht richtungsgebundene Fahrzeug 102' weist zwei Sensorpaare mit jeweils dem zweidimensional erfassenden Sensor 310 und dem weiteren zweidimensional erfassenden Sensor 310' an den beiden sich bezogen auf die Fahrzeuglängsachse L gegenüberliegenden Längsendbereichen 105 des Fahrzeugs 102 auf. Ein zweidimensionales Erfassen der Innenkontur 6, 6' kann so unabhängig von der Fahrtrichtung des nicht richtungsgebundenen Fahrzeugs 102' bereits bei einem Untertauchen des Längsendbereichs 105 unter die Wechselbrücke 2 durchgeführt werden, welcher in Fahrtrichtung nach vorne die Wechselbrücke 2 zuerst unterfährt.

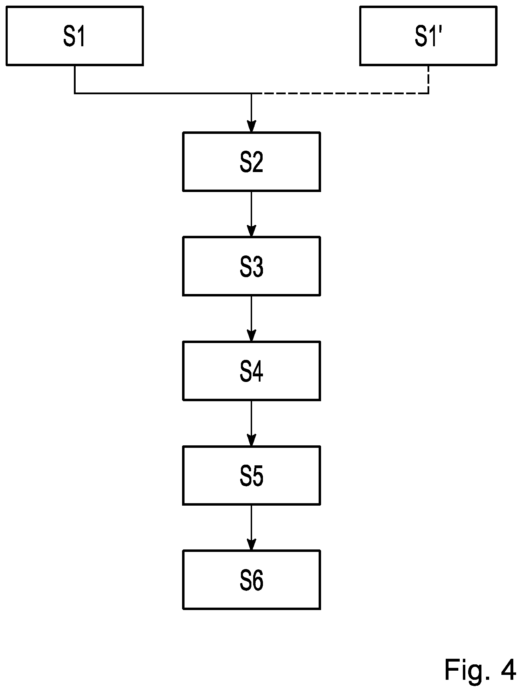

Figur 4 zeigt Verfahrensschritte S1 bis S6 zum Durchführen eines Verfahrens zum Steuern der Fahrdynamik des Fahrzeugs 102 in einer zeitlichen Abfolge gemäß einer Ausführungsform. Die Verfahrensschritte werden von dem System 400 durchgeführt, um die Fahrdynamik des Fahrzeugs 102 bei einem Unterfahren der Wechselbrücke 2 zu steuern.

In einem Verfahrensschritt S1 wird die Innenkontur 6 einer Zentrierschiene 4 der Wechselbrücke 2 mit dem zweidimensional erfassenden Sensor 310 erfasst. In einem optionalen weiteren Verfahrensschritt S1 ` wird die Innenkontur 6' der weiteren Zentrierschiene 4' der Wechselbrücke 2 mit dem zweidimensional erfassenden Sensor 310 erfasst. In einem weiteren Verfahrensschritt S2 werden die zweidimensional erfassten Innenkonturen 6, 6' von der Steuereinrichtung 410 eingelesen.

In einem weiteren Verfahrensschritt S3 wird eine Pose der zweidimensional erfassten Innenkonturen 6, 6' in dem fahrzeuggebundenen Koordinatensystem K des Fahrzeugs 102 basierend auf der zweidimensional erfassten Innenkontur 6, 6' bestimmt. Bei dem Bestimmen der Pose werden die Positionen und Orientierungen der Innenkonturen 6, 6' in dem fahrzeuggebundenen Koordinatensystem K bestimmt. In einem weiteren Verfahrensschritt S4 wird eine Relativpose des Wechselbrückenrahmens 20 bezogen auf den Zentriertunnel 3 basierend auf der bestimmten Pose bestimmt. Bei dem Bestimmen der Relativpose wird ein Winkel und ein Versatz zwischen der Fahrzeuglängsachse L und der Brückenmittenachse 5 bestimmt.

In einem weiteren Verfahrensschritt S5 wird eine Fahrdynamikkorrekturgröße basierend auf der bestimmten Relativpose bestimmt. Die Fahrdynamikkorrekturgröße weist gemäß einer Ausführungsform einen Lenkwinkelkorrekturwert oder einen Antriebskorrekturwert auf, mit welchem ein Lenkwinkel oder ein Antrieb der Fahrdynamikkomponente 320 korrigiert wird. In einem weiteren Verfahrensschritt wird die Fahrdynamikkomponente 320 des Fahrzeugs 102 basierend auf der bestimmten Fahrdynamikkorrekturgrö-ße zum automatisierten Unterfahren und Aufnehmen der Wechselbrücke 2 mit dem Wechselbrückenrahmen 20 gesteuert.

### Bezugszeichen

- 2: Wechselbrücke
- 3: Zentriertunnel
- 4, 4': Zentrierschiene
- 5: Brückenlängsachse
- 6, 6': Innenkontur
- 20: Wechselbrückenrahmen
- 102: Fahrzeug
- 102': nicht richtungsgebundenes Fahrzeug
- 103: Fahrerkabine
- 105: Längsendbereich
- 310, 310': zweidimensional erfassender Sensor
- 320: Fahrdynamikkomponente
- 400: System
- 410: Steuereinrichtung
- K: fahrzeuggebundenes Koordinatensystem
- L: Fahrzeuglängsachse
- S1, S1': zweidimensionales Erfassen
- S2: Einlesen Messdaten
- S3: Bestimmen Pose
- S4: Bestimmen Relativpose
- S5: Bestimmen Fahrdynamikkorrekturgröße
- S6: Steuern Fahrdynamikkomponente

## Patentansprüche

1. Verfahren zum Steuern der Fahrdynamik eines Fahrzeugs (102), wobei das Fahrzeug (102) einen Wechselbrückenrahmen (20) zum Unterfahren und Aufnehmen einer Wechselbrücke (2) und einen zweidimensional erfassenden Sensor (310) zum Erfassen der Wechselbrücke (2) aufweist, **gekennzeichnet durch** die Schritte: zweidimensionales Erfassen (S1) einer Innenkontur (6) einer Zentrierschiene (4) der Wechselbrücke (2) mit dem zweidimensional erfassenden Sensor (310), Bestimmen (S3) einer Pose der zweidimensional erfassten Innenkontur (6) in einem fahrzeuggebundenen Koordinatensystem (K) des Fahrzeugs (102) basierend auf der zweidimensional erfassten Innenkontur (6), Bestimmen (S4) einer Relativpose des Fahrzeugs (102) bezogen auf die Wechselbrücke (2) basierend auf der bestimmten Pose, und Steuern (S6) einer Fahrdynamikkomponente (320) des Fahrzeugs (102) basierend auf der bestimmten Relativpose zum automatisierten Unterfahren und Aufnehmen der Wechselbrücke (2) mit dem Wechselbrückenrahmen (20).

2. Verfahren nach Anspruch 1, wobei die Schritte des Verfahrens während dem Unterfahren der Wechselbrücke (2) mit dem Wechselbrückenrahmen (20) durchgeführt werden.

3. Verfahren nach Anspruch 1 oder 2, mit dem weiteren Schritt eines zweidimensionalen Erfassens (S1') einer Innenkontur (6') einer weiteren Zentrierschiene (4') der Wechselbrücke (2) mit dem zweidimensional erfassenden Sensor (310), wobei die Zentrierschiene (4) und die weitere Zentrierschiene (4') einen Zentriertunnel (3) der Wechselbrücke (2) ausbilden, wobei der Schritt des Bestimmens (S3) der Pose basierend auf den beiden erfassten Innenkonturen (6, 6') durchgeführt wird.

4. Verfahren nach einem der vorhergehenden Ansprüche, mit dem weiteren Schritt eines Bestimmens (S5) einer Fahrdynamikkorrekturgröße basierend auf der bestimmten Relativpose, wobei der Schritt des Steuerns (S6) der Fahrdynamikkomponente (320) basierend auf der bestimmten Fahrdynamikkorrekturgröße durchgeführt wird.

5. Verfahren nach einem der vorhergehenden Ansprüche, wobei der Schritt des Steuerns (S6) der Fahrdynamikkomponente (320) ein Steuern von mindestens einem von einer Querdynamikkomponente und einer Längsdynamikkomponente des Fahrzeugs (102) aufweist.

6. Verfahren nach einem der vorhergehenden Ansprüche, wobei mit einem dreidimensional erfassenden Sensor (310) als dritte Dimension eine Höhendifferenz zwischen einem Höhenniveau des Wechselbrückenrahmens (20) des Fahrzeugs (102) und einem Höhenniveau der Wechselbrücke (2) bestimmt wird.

7. Verfahren nach Anspruch 6, wobei das Höhenniveau des Wechselbrückenrahmens (20) des Fahrzeugs (102) beim Unterfahren der Wechselbrücke (2) kontinuierlich an das Höhenniveau der Wechselbrücke (2) angepasst wird.

8. System (400) zum Steuern der Fahrdynamik eines Fahrzeugs (102), mit einem zweidimensional erfassenden Sensor (310) zum Erfassen einer Wechselbrücke (2), wobei der zweidimensional erfassende Sensor (310) eingerichtet ist, eine Innenkontur (6) einer Zentrierschiene (4) der Wechselbrücke (2) zweidimensional zu erfassen, und einer Steuereinrichtung (410), welche eingerichtet ist, eine Pose der zweidimensional erfassten Innenkontur (6) basierend auf der zweidimensional erfassten Innenkontur (6) in einem fahrzeuggebundenen Koordinatensystem (K) des Fahrzeugs (102) zu bestimmen, eine Relativpose des Fahrzeugs (102) bezogen auf die Wechselbrücke (2) basierend auf der bestimmten Pose zu bestimmen, und eine Fahrdynamikkomponente (320) des Fahrzeugs (102) basierend auf der bestimmten Relativpose zum automatisierten Unterfahren und Aufnehmen der Wechselbrücke (2) mit dem Wechselbrückenrahmen (20) zu steuern.

9. Fahrzeug (102) zum Befördern einer Wechselbrücke (2), welches das System (400) nach Anspruch 8 aufweist.

10. Fahrzeug (102) nach Anspruch 9, wobei das Fahrzeug ein nicht richtungsgebundenes Fahrzeug (102') ist, welches zu einem nicht richtungsgebundenen Anfahren und Unterfahren der Wechselbrücke (2) ausgebildet ist.

11. Fahrzeug (102) nach Anspruch 9 oder 10, wobei der zweidimensional erfassende Sensor (310) des Systems (400) an einer Fahrzeuglängsachse (L) angeordnet ist.

12. Fahrzeug (102) nach einem der Ansprüche 9 bis 11, welches zwei zweidimensional erfassende Sensoren (310) aufweist, welche bezogen auf eine Fahrzeuglängsachse (L) versetzt an dem Fahrzeug (102) angeordnet sind, und wobei jeder zweidimensional erfassende Sensor (310) wie der zweidimensional erfassende Sensor (310) des Systems (400) ausgebildet ist.

13. Fahrzeug (102) nach einem der Ansprüche 9 bis 12, welches zwei zweidimensional erfassende Sensoren (310) aufweist, welche bezogen auf eine Fahrzeugquerachse versetzt an dem Fahrzeug (102) angeordnet sind, und wobei jeder zweidimensional erfassende Sensor (310) wie der zweidimensional erfassende Sensor (310) des Systems (400) ausgebildet ist.

14. Fahrzeug (102) nach einem der Ansprüche 9 bis 13, welches zwei zweidimensional erfassende Sensoren (310, 310`) aufweist, welche an den beiden Längsendbereichen des Fahrzeugs (102) angeordnet sind, und wobei jeder zweidimensional erfassende Sensor (310, 310') wie der zweidimensional erfassende Sensor (310) des Systems (400) ausgebildet ist.
